# EUROPEAN PATENT SPECIFICATION

(11) **EP 3 578 796 B1**
(45) Date of publication and mention of the grant of the patent: **14.07.2021**
(21) Application number: 19170421.2
(22) Date of filing: 19.04.2019
(51) Int. Cl.: F02M 35/02, F02M 35/024, F02M 35/04, F02M 35/16, F02M 37/00, B60K 15/063, B60K 15/067, B62J 35/00, B60K 13/02, F02M 35/10

(54) **SADDLE-RIDING VEHICLE**
SATTELFAHRZEUG
VÉHICULE DE TYPE À ENFOURCHER

(30) Priority: 07.06.2018 JP 2018109286
(43) Date of publication of application: 11.12.2019
(73) Proprietor: Kawasaki Jukogyo Kabushiki Kaisha, Hyogo 650-8670 (JP)
(72) Inventor: AKAKI, Hiroyuki, Hyogo, 650-8670 (JP); ICHI, Satoaki, Hyogo, 650-8670 (JP)
(74) Representative: Porta & Consulenti Associati S.p.A.

(56) References cited:
- EP-A2- 1 659 054
- EP-A2- 2 022 974
- DE-A1-102017 218 462
- JP-U- S60 119 644
- US-A1- 2007 132 225
- US-A1- 2015 027 797
- US-A1- 2017 152 821
- US-B2- 9 556 833

## Description

### BACKGROUND OF THE INVENTION

### (Field of the Invention)

The present invention relates to a saddle-riding vehicle having an air cleaner disposed above a cylinder head of an engine.

### (Description of Related Art)

A saddle-riding vehicle such as, for example, a motorcycle, has been known in which an air cleaner is disposed above a cylinder head of an engine and between left and right paired main frames, and a fuel tank is disposed above the air cleaner. (See, for example, the Japanese Laid-open Patent Publication No. 2017-186942.) According to the Japanese Laid-open Patent Publication No. 2017-186942, since the air cleaner is disposed above the cylinder head, a downdraft structure can be easily realized, and also, the engine output can be increased.

It has been found that since in the Japanese Laid-open Patent Publication No. 2017-186942 the fuel tank is disposed above the air cleaner, it is difficult to secure the volume of the air cleaner and the fuel tank. For example, if the dimensions of the fuel tank or the air cleaner in the vertical direction is increased, the vehicle height may increase correspondingly with its center of gravity shifted upwards. Also, since the air cleaner is disposed between the left and right paired main frames, increase of the dimensions of the air cleaner makes it difficult to support an intermediate portion of the fuel tank in the forward and rearward direction.

Documents US2017152821 A1 and US2015027797 A1 disclose saddle-riding vehicles.

### SUMMARY OF THE INVENTION

In view of the foregoing, the present invention has for its object to provide a saddle-riding vehicle in which the volume of the air cleaner can be secured and the support of the fuel tank can also be stabilized.

In order to accomplish the foregoing object, a saddle-riding vehicle according to the present invention is recited in claim 1.

According to the construction described above, since at a forward and rearward direction intermediate portion of the fuel tank an area having the largest widthwise dimension, the fuel tank is supported by the tank support portion, the support of the fuel tank is stabilized. While the side walls of the cleaner casing, which are opposed to each other in the vehicle widthwise direction, are provided with the recess, the vehicle widthwise dimension of the cleaner casing in its entirety does not change, and therefore, the volume of the air cleaner can be secured.
In the present invention, a widthwise dimension between left and right recesses in an interior of the cleaner casing may be set to a value smaller than the widthwise dimension of a cleaner element within the cleaner casing. According to this construction, a surface area (filtering surface area) of the cleaner element is secured, and also, a space for installation of the tank support portion can be secured. In this case, the cleaner element may include a filter portion, through which air passes, and a fitting portion defined at a periphery of the filter portion, and the widthwise dimension between the recesses may be set to a value larger than a widthwise dimension of the filter portion. According to this construction referred to above, even though the cleaner casing is provided with the recess, a passage for the flow of the air can be secured which has a widthwise dimension larger than the widthwise dimension at the filter portion.

The engine may be a multi-cylinder engine having a plurality of cylinders juxtaposed in the vehicle widthwise direction, and outlets of the air cleaner are lined up in the vehicle widthwise direction in accordance with a row of the cylinders. Where the widthwise dimension between the recesses is set to a value smaller than the widthwise dimension of the cleaner element, the widthwise dimension between the recesses may be set to a value smaller than the widthwise dimension of the outlet. The term "widthwise dimension of the outlet" referred to above and hereinafter shall be understood as meaning the distance between widthwise direction outer end edges of the outlets, which are positioned at opposite ends of the outlets that are lined up in the vehicle widthwise direction. According to this construction, while the volume of the air cleaner is secured by increasing the widthwise dimension in the vicinity of the outlet of the air cleaner, the space for installation of the tank support portion can be secured.

In the present invention, the saddle-riding vehicle may further include a throttle body for connecting together an outlet of the air cleaner and an air intake port of the cylinder head, in which case the cleaner casing includes a bottom wall in which an upwardly recessed portion is formed in the bottom wall, a portion of the throttle body being accommodated in the recessed portion. According to this construction described above, the volume of the air cleaner can be secured while the bottom portion of the cleaner casing is positioned downwards as possible as practicable, and therefore, any possible interference of the cleaner casing with the throttle body can be avoided.

In the present invention, the cleaner casing is constructed by connecting together two, upper and lower split casing halves, in which case a mating surface between the casing halves extends in a forward and rearward direction or a longitudinal direction with respect to a vehicle body, along the main frames. According to this construction, because of cleaner casing being made up of the two split, the upper and lower casing halves, removal of the fuel tank and the upper casing half makes it possible to remove the cleaner element, and therefore, the maintenance is good. Also, since the mating surface extends along the main frame, any possible interference between the joint portion of the casing halves with the main frame can be easily avoided.

Where the cleaner casing is of the two component type constructed by connecting the upper and lower split casing halves together through the mating surface, an inlet and a cleaner element may be provided in the front half portion of the air cleaner and, an outlet may be provided in the rear half portion of the air cleaner. An electronic control unit may be fitted to an upper surface of the front half portion of the air cleaner, and the inlet may be formed in a lower portion of the front half portion of the air cleaner. The upper surface of the front half portion of the air cleaner may be upwardly inclined towards a rear relative to the mating surface.

According to the above construction, with the upper surface (upper wall) of the front half portion having been inclined, the air can be rearwardly guided by the upper wall, and thus, the flow of the air is rendered to be smooth. Also, since there is no need to incline the upper wall in the rear half portion, the volume (height) of a clean chamber can be secured. Also, since the electronic control unit is disposed in the vicinity of the engine, the cable required between the engine and the electronic control unit can have a reduced length. In view of the foregoing, the weight can be reduced, and also, noises become difficult to ride on the cable.

In addition, since the electronic control unit is fitted to the inclined surface, the electronic control unit is also disposed having been tilted forwards. Accordingly, oppression of the fuel tank by the electronic control unit can be suppressed, and thus, it is easy to secure the volume of the fuel tank. Also, with the electronic control unit being tilted forwards, the harness connected with the front surface of the electronic control unit extends downwardly (towards the engine) and, hence, wiring of the cable is rendered to be easy to accomplish.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a side view showing a front portion of a motorcycle, which is one of the saddle-riding vehicles designed in accordance with a first preferred embodiment of the present invention;
Fig. 2 is a top plan view showing the front portion of the motorcycle shown in Fig. 1;
Fig. 3 is a side view showing a fuel tank fitting structure employed in the motorcycle shown in Fig. 1;
Fig. 4 is a side view showing, on an enlarged scale, the neighborhood of an air cleaner used in the motorcycle shown in Fig. 1;
Fig. 5 is a longitudinal sectional view of the neighborhood of the air cleaner;
Fig. 6 is a top plan view showing the air cleaner;
Fig. 7 is a top plan view showing a disposition of the air cleaner embodying the present invention in comparison with that of the conventional air cleaner; and
Fig. 8 is a side view showing the disposition of the air cleaner embodying the present invention in comparison with that of the conventional air cleaner.

### DESCRIPTION OF PREFERRED EMBODIMENTS

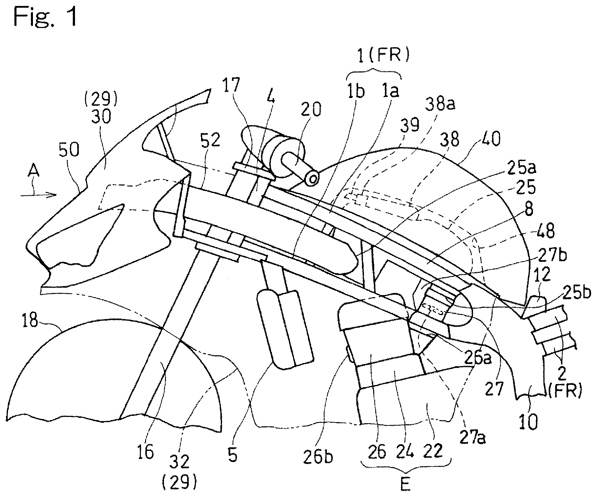

Hereinafter, a preferred embodiment of the present invention will be described in detail with particular reference to the accompanying drawings. Fig. 1 is a side view showing a front portion of a motorcycle, which is a kind of saddle-riding vehicle according to the first preferred embodiment of the present invention. In the specification hereinafter set forth, it is to be noted that the terms "left" and "right" are used to denote opposite positions or directions, respectively, relative to a motorcycle rider or motorist then occupying a motorcycle rider's seat and looking forwards. It is also to be noted that the terms "upstream" and "downstream" are used to denote opposite positions or direction, respectively, relative to the direction of flow of an intake air in the vehicle.

A vehicle framework FR of the motorcycle referred to in the description of the preferred embodiment includes a main frame 1 forming a front portion of the vehicle framework FR and a rear frame 2 forming a rear portion of the vehicle framework FR. The rear frame 2 is jointed with a rear portion of the main frame 1. The main frame 1 extends slantwise downwardly and rearwardly from a head pipe 4 defined at a front end thereof. The main frame 1 employed in the practice of the embodiment now under discussion includes an upper frame 1a and a lower frame 1b. The upper frame 1a extends slantwise downwardly from an upper portion of the head pipe 4 in a rearward direction. The lower frame 1b extends slantwise downwardly from a lower portion of the head pipe 4 in the rearward direction. A radiator 5 for an engine cooling water is supported by the lower frame 1b.

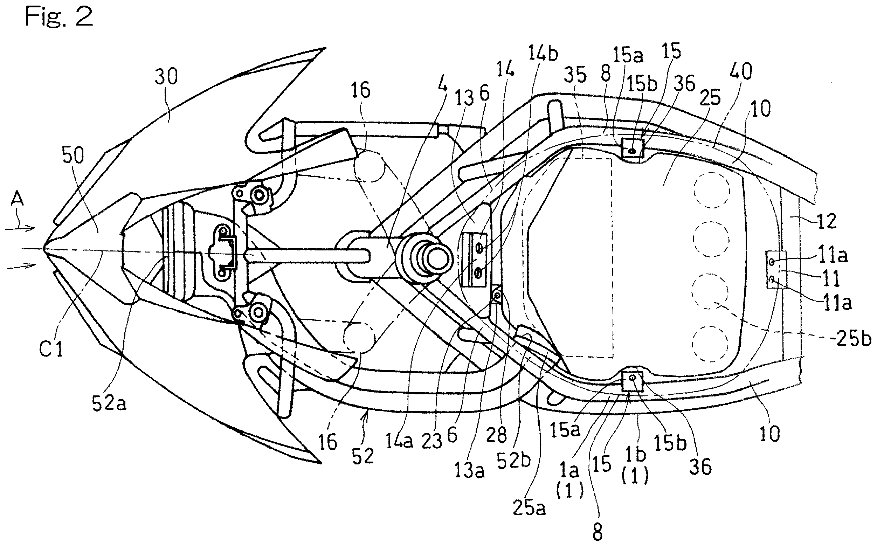

As shown in Fig. 2, the main frame 1 is used in one pair made up of left and right main frames. Specifically, each of the upper frame 1a and the lower frame 1b is used in one pair. The main frame 1 on each of the left and right side includes: a frame front portion 6 extending rearwardly from the head pipe 4; a frame intermediate portion 8 extending rearwardly from the frame front portion 6; and a frame rear portion 10 extending rearwardly from the frame intermediate portion 8.

The left or right frame front portion 6 has a front end with which a bracket 13 is jointed. The bracket 13 has an upper surface on which a first tank support portion 14 is provided. The first tank support portion 14 is prepared from a sheet metal and is fixed to the bracket 13 by means of welding. The first tank support portion 14 has a fitting surface 14a that is oriented diagonally rearwardly and upwardly, and an engagement hole 14b is formed in this fitting surface 14a. In the practice of the embodiment now under discussion, the engagement hole 14b is employed two in number having been juxtaposed relative to each other in a vehicle widthwise direction. The bracket 13 has a rear end provided with a cleaner support portion 13a. The cleaner support portion 13a is formed with a fitting hole (not shown) that is oriented upwards.

The left or right frame rear portion 10 has a rear end portion connected with a cross pipe 12 that extends in the vehicle widthwise direction. The cross pipe 12 is provided with a second tank support portion 11. The second tank support portion 11 is prepared from a sheet metal and is fixed to the cross pipe 12 by means of welding. The second tank support portion 11 is formed with a fitting hole 11a that is oriented upwards.

The left or right frame front portion 6 is, when viewed in a top plan view, flared, towards in a rearward direction, laterally outwardly of the vehicle widthwise direction. In other words, the spacing between the left and right frame front portions 6 in the vehicle widthwise direction gradually increases towards the rearward direction. The left and right frame intermediate portions 8 extend parallel to each other in a longitudinal direction of a vehicle body. In other words, the spacing, in the vehicle widthwise direction, between the left and right frame intermediate portion 8 is substantially constant. In the practice of the embodiment now under discussion, the frame rear portion 10 extends slantwise in the rearward direction towards an inner side of the vehicle widthwise direction. In other words, the spacing between the left and right frame rear portions 10 in the vehicle widthwise direction gradually decreases towards the rearward direction. Accordingly, at the frame intermediate portion 8, the spacing between the left and right main frames 1 in the vehicle widthwise direction is maximized.

Each of the left and right frame intermediate portions 8 is provided with a third tank support portion 15. Each of the third tank support portions 15 protrudes from the frame intermediate portion 8 in a direction laterally inwardly of the vehicle widthwise direction. In the practice of the embodiment now under discussion, each of the third tank support members 15 is provided at a forward and rearward direction intermediate portion of the frame intermediate portion 8, that is, at a forward and rearward direction intermediate portion of the main frame 1. The third tank support portion 15 employed in the practice of the embodiment now under discussion is formed by bending a sheet metal and is fixed to the frame intermediate portion 8 by means of welding. The third tank support portion 15 has a horizontal upper surface 15a with an upwardly oriented throughhole 15b formed in the upper surface 15a. It is, however, to be noted that the structure of the third tank support portion 15 is not necessarily limited to that shown and described.

A pair of left and right front forks 16 are pivotally supported by the head pipe 4 defined at the front end of the main frame 1 through a steering shaft (not shown) as shown in Fig. 1. The front forks 16 have respective lower ends on which a front wheel 18 is supported. A handlebar 20 is fitted to an upper bracket 17 for supporting an upper end portion of the front fork 16. A swingarm (not shown) is supported by a rear end lower portion of the main frame 1, and a rear wheel (not shown) is supported by this swingarm. An engine E is supported by an intermediate lower portion of the main frame 1. The engine E drives the rear wheel.

The engine E employed in the practice of the embodiment now under discussion is a water cooled, four cylinder four cycle engine in which cylinders are juxtaposed in the vehicle widthwise direction. It is, however, to be noted that the engine may be necessarily limited to that shown and described. The engine E includes: a crankcase 22, which supports a crankshaft; cylinders 24 protruding upwardly from a front portion of the crankcase 22; and a cylinder head 26 positioned above the cylinders 24. An air intake port 26a, through which air is introduced, is formed in a rear surface of the cylinder head 26. A front surface of the cylinder head 26 is formed with an exhaust port 26b through which exhaust gases are discharged.

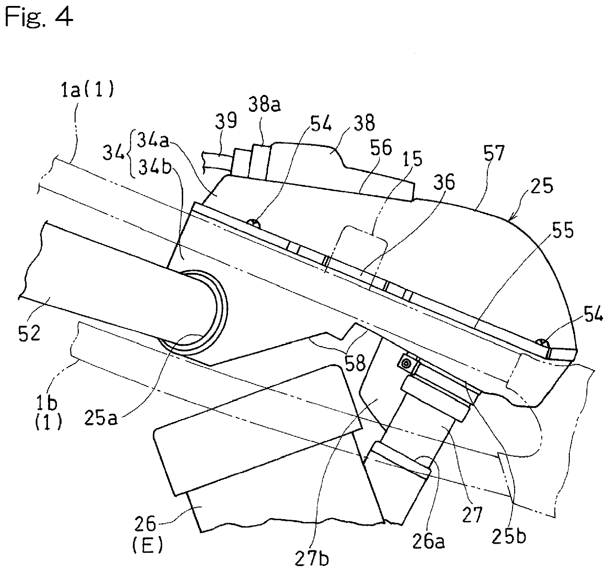

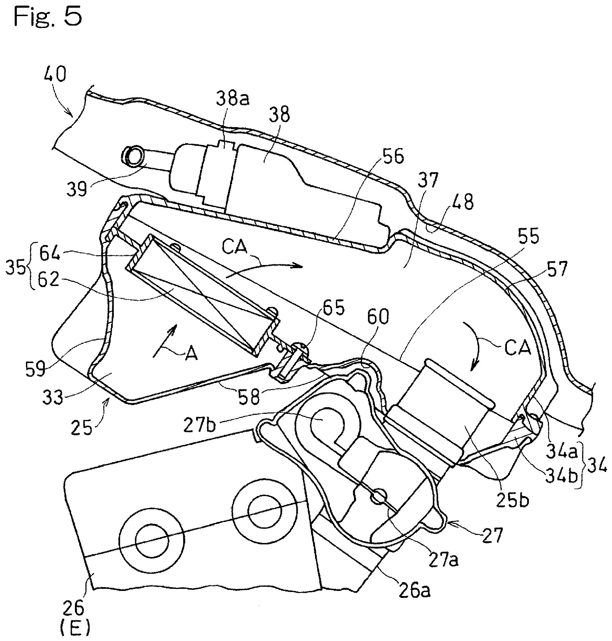

An air cleaner 25 is disposed above the cylinder head 26 of the engine E. This air cleaner 25 is operable to filtrate air being supplied to the engine E. Specifically, the air cleaner 25 includes a cleaner casing 34 shown in Fig. 4 and a cleaner element 35 (Fig. 5) disposed within the cleaner casing 34. Air is then filtered as it flows through the cleaner element 35.

As shown in Fig. 2, the air cleaner 25 is, when viewed in a top plan view, interposed between the left and right main frames 1 and 1. A fitting piece 28 is provided in a front surface of the air cleaner 25. A front portion of the air cleaner is fixed to the cleaner support portion 13a of the main frame 1 through the fitting piece 28 by means of a bolt 23.

On a left side of the front portion of the air cleaner 25, a cleaner inlet 25a is formed, and a cleaner outlet 25b is formed in a rear portion. The cleaner outlet 25b is disposed one in number for each of the cylinders, and the four cleaner outlets 25b are juxtaposed in the vehicle widthwise direction. Each of the cleaner outlets 25b employed in the practice of the embodiment now under discussion is formed by a funnel that extends through a bottom wall of the cleaner casing 34 of the air cleaner 25.

A recess 36 recessed inwardly with respect to the vehicle widthwise direction is formed in side walls of the cleaner casing 34, which side walls are opposed to each other in the vehicle widthwise direction. The recess 36 is formed in a forward and rearward direction intermediate portion of the air cleaner 25. This recess 36 is positioned rearwardly of the cleaner element 35. Within a space obtained when the recess 36 is formed, the third tank support portion 15 is disposed. The details of the air cleaner 25 will be discussed later.

As shown in Fig. 1, a throttle body 27 is connected between the cleaner outlet 25b and the air intake port 26a of the engine E. In other words, the air cleaner 25 has a rear portion supported by the engine E through the throttle body 27. A throttle valve 27a is provided within the throttle body 27. The throttle valve 27a is operable to regulate the amount of air to be supplied to the engine E. A drive mechanism 27b for the throttle valve 27a is provided in a front portion of the throttle body 27. The drive mechanism 27b referred to above includes, for example, a motor and motor gears. This drive mechanism 27b protruded upwardly from the front portion of the throttle body 27.

An upper surface of a front half portion of the air cleaner 25 has an electronic control unit 38 fitted thereto. The electronic control unit 38 is operable to control the drive of both of the motorcycle and the engine. This electronic device 38 is covered by a rubber covering (not shown) and, with the rubber covering being engaged with a projection (not shown) provided on the upper surface of the air cleaner 25, the electronic control unit 38 is fitted to the air cleaner 25. A method of fitting of the electronic control unit 38 is not necessarily limited to the manner shown and described. The electronic control unit 38 has a front surface provided with a connector 38a. A cable 39 is connected with this connector 38a.

A fuel tank 40 is disposed above the air cleaner. As shown in Fig. 2, the fuel tank 40 is interposed between the left and right main frames 1 with its front end positioned rearwardly of the head pipe 4 while a rear end thereof is positioned in the vicinity of the cross pipe 12.

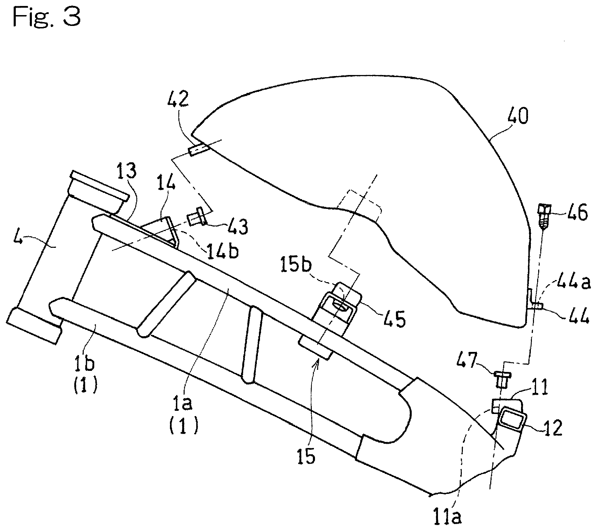

As shown in Fig. 3, an engagement projection 42, which extends forwards and slantwise downwardly, is provided in a lower surface of a front end of the fuel tank 40. The engagement projection 42 is employed two in number having been juxtaposed relative to each other in the vehicle widthwise direction. The fuel tank 40 also has a rear surface provided with a bracket 44. The bracket 44 is formed by bending a metal sheet and is welded to the rear surface of the fuel tank 40. The bracket 44 is formed with an upwardly oriented bolt insertion holes 44a. The bolt insertion holes 44a are employed two in number having been juxtaposed relative to each other in the vehicle widthwise direction.

The engagement projection 42 of the fuel tank 40 is inserted in the engagement hole 14b of the first support portion 14 of the main frame 1, through an elastic member 43 such as, for example, rubber. Accordingly, the front portion of the fuel tank 40 is supported by the main frame 1. An elastic body 45 such as, for example, rubber is mounted in the throughhole 15b defined in the third tank support portion 15. A forward and rearward direction intermediate portion of a bottom surface of the fuel tank 40 is mounted on the third tank support portion 15 through the elastic body 45. Accordingly, the intermediate portion of the fuel tank 40 is supported by the main frame 1.

A bolt 46 is inserted from above into each of the bolt insertion holes 44a of the bracket 44 in a rear surface of the fuel tank 40 and is fastened to each of the fitting holes 11a of the second tank support portion 11 in the cross pipe 12 through an elastic member 47 such as, for example, rubber. Accordingly, the rear portion of the fuel tank 40 is supported by the main frame 1. As shown in Fig. 2, the third tank support portion 15 supports a portion of the fuel tank 40, which portion has the largest dimensions in the vehicle widthwise direction. Accordingly, the fuel tank 40 is stably supported.

The fuel tank 40 shown in Fig. 1 has a bottom plate formed with a recessed or concave portion 48 that is bulked in an upward direction. An upper portion of the air cleaner 25 and the electronic control unit 38 are positioned within a space that is formed as a result of formation of the concave portion 48. In other words, when viewed in a side view, the upper portion of the air cleaner 25 and the electronic control unit 38 are superimposed one above the other. Accordingly, when removal and maintenance of the electronic control unit 38 are to be carried out, the fuel tank 40 is required to be removed. Accordingly, lifting or theft of the electronic control unit 38 is made difficult.

The motorcycle referred to in the practice of the embodiment makes use of a front cowl 30 and left and right pairs side cowls 42. The front cowl 30 and the side cowls 32 cooperate together to form a fairing 29 for protecting a motorcycle rider from the wind pressure during the run of the motorcycle. The front cowl 30 covers an area forwardly of the head pipe 4. The side cowl 32 is positioned rearwardly of the front cowl 30 so as to cover the front portion of the motorcycle, specifically the main frame 1 and the engine E from lateral outside. The front cowl 30 has a front surface formed with an air introducing opening 50 that opens forwardly. When the motorcycle is driven, the incoming wind A is taken in from the air introducing opening 50 as an intake air to be supplied to the engine E.

The use is made of an air intake duct 52 for communicating the air introducing opening 50 with the air cleaner 25. An inlet port 52a defined at a front end of the air intake duct 52 shown in Fig. 2 is positioned on the vehicle widthwise direction center line C1 of the motorcycle and confronts the air introducing opening 50. An outlet port 52b defined in a rear end of the air intake duct 52 is fluid connected with the cleaner inlet 25a on a front left side of the air cleaner 25. In other words, the air intake duct 52 serves to receive the incoming wind A through the air introducing opening 50 and subsequently to supply the incoming wind A to the air cleaner 25 after having been passed on a left side of the motorcycle.

As shown in Fig. 4, the cleaner casing 34 is of two component structure including two split, upper and lower casing halves 34a and 34b, which halves 34a, 34b are connected together by means of bolts 54. A mating surface 55 of the casing halves 34a and 34b extends along the main frame 1 in the forward and rearward direction or longitudinal direction of the vehicle body. The term "forward and rearward direction" referred to above and hereinafter has to be construed as including a direction inclined somewhat (an angle of, for example, not greater than 10 to 20°) from the horizontal direction. The cleaner inlet 25a referred to above is formed in a front portion of the lower casing half 34b.

An upper surface of a front half portion of the upper casing half 34a includes an inclined surface 56 that is inclined upwardly towards the rearward direction relative to the mating surface 55. The electronic control unit 38 referred to previously is fitted to this inclined surface 56. An upper surface of a rear half portion of the upper casing half 34a is constituted by a curved surface 57 which is smoothly upwardly bulged at a front portion thereof and which is smoothly downwardly curved at a rear portion thereof.

As shown in Fig. 5, the cleaner element 35 is accommodated within the front portion of the cleaner casing 34. An upstream side of the cleaner element 35 within the cleaner casing 34 is defined as a dirty chamber 33, whereas a downstream side thereof is defined as a clean chamber 37. The cleaner element 35 includes a filter portion 62, through which the air passes, and a fitting portion 64 defined at a periphery of the filter portion 62. The fitting portion 64 is swaddled down by the upper casing half 34a, and a rear portion of the fitting portion 64 is fixed to the lower casing half 34b by means of screw bodies 65. It is, however, to be noted that the method of fixing the cleaner element 35 is not necessarily limited to that described above.

The cleaner inlet 25a (Fig. 4) is provided in an area downwardly of the cleaner element 35, and the inclined surface 56 is formed in an area upwardly of the cleaner element 35. The cleaner outlet 25b is formed in a rear end portion of the lower casing half 34b.

The cleaner casing 34 has a front wall 59 that extends substantially in an upward and downward direction or vertical direction. The cleaner casing 34 has a bottom wall 58, a front half portion of which extends upwardly towards the rearward direction along the upper surface of the cylinder head 26. The bottom wall 58 also has a rear half portion which extends inclined downwardly towards the rearward direction. A recessed portion 60, which is recessed upwardly, is formed in a rear half portion of the bottom wall 58 of the cleaner casing 34. Within a space that is left consequent upon formation of the recessed portion 60, a portion of the drive mechanism 27b for the throttle body 27 is accommodated.

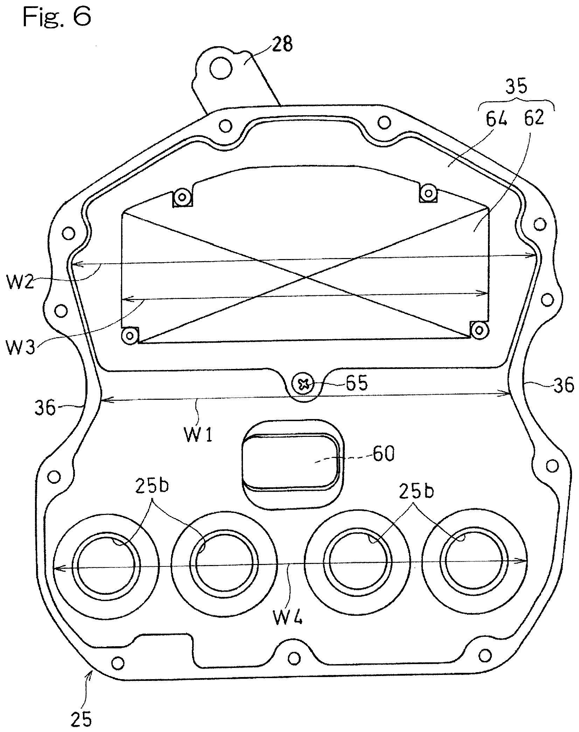

As shown in Fig. 6, it is assumed that a first widthwise dimension between the left and right recesses 36 and 36 within the cleaner casing 34 is expressed by W1, and a second widthwise dimension of the cleaner element 35 within the cleaner casing 34 is expressed by W2. In the practice of the embodiment now under discussion, the first widthwise dimension W1 between the recesses 36 and 36 is so selected as to be smaller than the second widthwise dimension W2 of the cleaner element 35 (W1 < W2). The second widthwise dimension W2 of the cleaner element 35 is that of a portion where the widthwise dimension of the fitting portion 64 of the cleaner element 35, that is, that of a portion of the fitting portion 64 where the widthwise dimension is largest.

It is also assumed that a third widthwise dimension of the filter portion 62 in the cleaner element 35 is expressed by W3. In the practice of the embodiment now under discussion, the first widthwise dimension W1 between the recesses 36 and 36 is selected to be larger than the third widthwise dimension W3 of the filter portion 62. It is, however, to be noted that the first widthwise dimension W1 between the recesses 36 and 36 may be smaller than the third widthwise dimension W3 of the filter portion 62. It is assumed that a fourth widthwise dimension of the cleaner outlet 25b is expressed by W4. In the practice of the embodiment now under discussion, the first widthwise dimension W1 between the recesses 36 and 36 is so selected as to be smaller than the fourth widthwise dimension W4 of the cleaner outlet 25b. It is to be noted that the term "widthwise dimension of the cleaner outlet" referred to above and hereinafter means a distance between widthwise direction outer end edges of the cleaner outlets 25b defined at opposite ends of the cleaner outlets 25b that are lined up in the vehicle widthwise direction. In any event, relationships among the first to fourth widthwise dimensions W1 to W4 may not necessarily limited to those discussed above.

In the description that follows, the flow of the intake air in the motorcycle referred to in the practice of the embodiment now under discussion will be set forth. When the motorcycle is driven, the incoming wind A shown in Fig. 2 is introduced into the air intake duct 52 through the air introducing opening 50. The air A so introduced into the air intake duct 52 is subsequently introduced into the air cleaner 25.

The air A introduced into the air cleaner 25 is, as shown in Fig. 5, filtered through the cleaner element 35 within the air cleaner 25 to turn the air A into a cleaned air CA. The cleaned air CA is subsequently guided rearwardly by the inclined surface 56 of the cleaner casing 34 and then flows rearwardly towards the cleaner outlet 25b. The cleaned air CA is then supplied from the cleaner outlet 25b to the engine E through the throttle body 27.

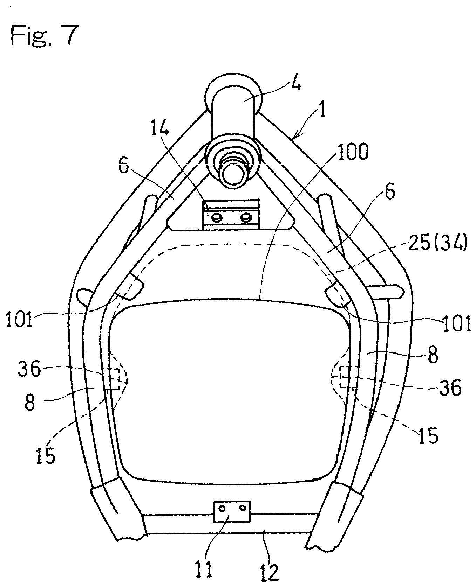

As shown in Fig. 7, the conventional air cleaner 100 is disposed between the left and right frame center portions 8 and 8, where the spacing is largest, and the conventional third tank support portion 101, which supports an intermediate portion of the fuel tank 101, has been provided forwardly of the air cleaner 100. In other words, the fuel tank 40 has been supported by the first tank support portion 14 at the front end, the second tank support portion 11 at the rear end and the third tank support portion 101 at the intermediate. In such case, the third tank support portion 101 at the intermediate is caused to support a site, at which the widthwise dimension is not maximum, at a location more adjacent to the front than to the forward and rearward direction intermediate portion of the fuel tank 40.

In contrast thereto, according to the embodiment now under discussion, as shown by the broken lines in Fig. 7, the third tank support portion 15 is provided at a forward and rearward direction intermediate portion of the fuel tank 40, and the side walls of the cleaner casing 34, which are opposed to each other in the vehicle widthwise direction, are provided with the recesses 36 for accommodating therein the third tank support portions 15. In addition, with the conventional third tank support portion 101 dispensed with, a space is made available forwardly of the air cleaner 100, and therefore, the air cleaner 25 is expanded forwardly.

In view of the foregoing, since the area of the fuel tank 40 having the largest widthwise dimension is supported by the tank support portion 15 at the intermediate portion of the fuel tank 40 with respect to the longitudinal direction of the vehicle body, the support of the fuel tank 40 is stabilized. Also, since the recesses 36 are provided only in the respective side walls of the cleaner casing 34 that are opposed to each other in the vehicle widthwise direction, the vehicle widthwise direction dimension of the cleaner casing 34 in its entirety does not change, and therefore, the volume of the air cleaner can be prevented from excessively decreasing. Also, since the dimension of the air cleaner 25 in the longitudinal direction of the vehicle body can be made large, the volume of the clean chamber 37 is increased about 10% as compared with the conventional air cleaner 100 even though the use is made of the recesses 36.

As shown in Fig. 6, the first widthwise dimension W1 between the recesses 36 and 36 is so set to a value smaller than the second widthwise dimension W2 of the cleaner element 35. Accordingly, while a surface area (filtering surface area) of the cleaner element 35 is secured, a space for installation of the third support portion 15 can be secured. In addition, the first widthwise dimension W1 between the recesses 36 and 36 is set to a value larger than the third widthwise dimension W3 of the filter portion 62. Accordingly, even though the recess 36 is provided in the cleaner casing 34, an air passage of a size larger than the third widthwise dimension W3 of the filter portion 62 can be secured.

The first widthwise dimension W1 between the recesses 36 and 36 is set to a value smaller than the fourth widthwise dimension W4 of the cleaner outlet 25b. Accordingly, while the volume of the air cleaner 25 is secured with the widthwise dimension in the vicinity of the cleaner outlet 25b of the air cleaner 25 being increased, the space for installation of the third tank support portion 15 can be secured.

As shown in Fig. 5, since the upper surface (inclined surface 56) of the front half portion of the air cleaner 25 is inclined upwardly towards the rearward direction, the air CA is guided rearwardly by the inclined surface 56, and thus, the flow of the air CA is rendered to be smooth. Also, since a major portion, excluding a rear portion, of an upper wall in the rear half portion of the air cleaner 25 is represented by the curved surface 57 and is not inclined downwardly, the rear half portion of the air cleaner 25 can have an interior of the cleaner casing 34 that is increased. Thereby, the volume of the clean chamber 37 can be secured.

Yet, the inclined surface 56 of the air cleaner 25 has the electronic control unit 38 fitted thereto. Accordingly, the electronic control unit 38 is disposed at a site near to the engine E, and therefore, the cable 39 extending between the engine E and the electronic control unit 38 can have a reduced length. As a result thereof, reduction in weight can be accomplished, and also, noises become difficult to ride on the cable 39.

In addition, since the electronic control unit 38 is fitted to the inclined surface 56, the electronic control unit is also disposed having been tilted forwards. Accordingly, oppression of the fuel tank 40 by the electronic control unit 38 can be suppressed, and thus, it is easy to secure the volume of the fuel tank 40. Also, with the electronic control unit 38 being tilted forwards, the cable 39 connected with the front surface of the electronic control unit 38 extends downwardly towards the engine E, and hence, wiring of the cable 39 is rendered to be easy to accomplish.

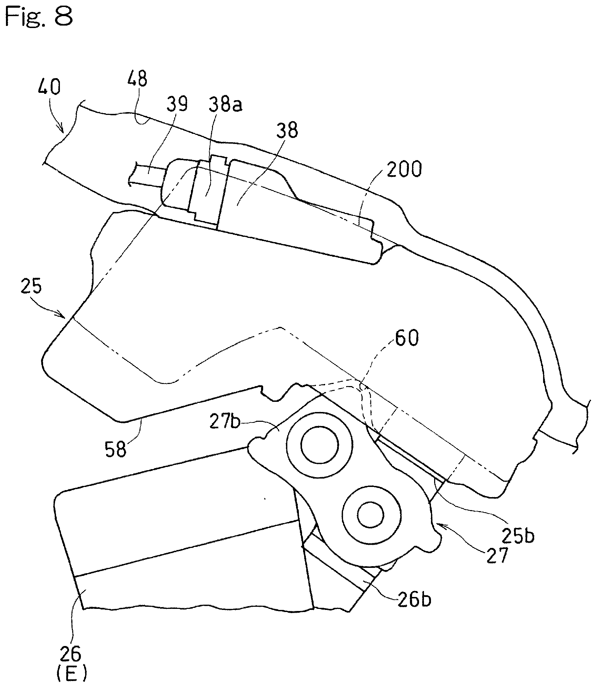

The conventional air cleaner 200 having no inclined surface 56 is shown by the double dotted line in Fig. 8. If the electronic control unit 38 is disposed on the upper surface of the air cleaner 200, the electronic control unit 38 will interfere with the fuel tank 40. Accordingly, in the practice of the foregoing embodiment now under discussion, the air cleaner 25 is disposed below the conventional air cleaner 200 and the upper surface of the front half portion of the air cleaner 25 is so formed as the inclined surface 56 so that the electronic control unit 38 can be disposed on that upper surface.

Disposition of the air cleaner 25 in a lower site may bring about the risk of interference with the engine E and the throttle body 27. In the practice of the embodiment now under discussion, the bottom wall 58 of the cleaner casing 34 extends along the upper surface of the cylinder head 26. Also, the bottom wall 58 is formed with the recessed portion 60, that is recessed upwardly, and the drive mechanism 27b for the throttle body 27 is accommodated within the recessed portion 60. Accordingly, the volume of the air cleaner 25 is secured while the bottom wall 58 of the cleaner casing 34 is positioned downwards as possible as practicable, and therefore, any possible interference of the cleaner casing 34 with the engine E and the throttle body 27 can be avoided.

As shown in Fig. 5, the cleaner casing 34 is constructed by connecting together the casing halves 34a and 34b which are provided by splitting the cleaner casing 34 in the vertical direction. Accordingly, removal of both of the fuel tank 40 and the upper casing half 34a makes it possible to remove the cleaner element 35, and hence, the maintenance is good. Also, since as shown in Fig. 4 the mating surface 55 between the upper casing half 34a and the lower casing half 34b extends, in the longitudinal direction of the vehicle body, along the main frame 1, interference between the joint between the casing halves 34a and 34b, including the mating surface 55, and main frame 1 can be easily avoided.

Although in describing the preferred embodiment of the present invention reference has been made to the motorcycle, the present invention can be applied to any saddle-riding vehicle other than the motorcycle such as, for example, tricycle and four-wheeled buggy.

### Reference Numerals

1 ···· Main frame
4 ···· Head pipe
15 ···· Third tank support portion (Tank support portion)
25 ···· Air cleaner
25a ···· Cleaner inlet (Inlet of the air cleaner)
25b ···· Cleaner outlet (Outlet of the air cleaner) 26 ···· Cylinder head
26a ···· Air intake port
27 ···· Throttle body
34 ···· Cleaner casing
34a ···· Upper casing half
34b ···· Lower casing half
35 ···· Cleaner element
36 ···· Recess
38 ···· Electronic control unit
40 ···· Fuel tank
55 ···· Mating surface of the casing halves
58 ···· Bottom wall of the cleaner casing
60 ···· Recessed portion
62 ···· Filter portion
64 ···· Fitting portion
E ···· Engine
W1 ···· Widthwise dimension between the left and right recesses
W2 ···· Widthwise dimension of the cleaner element
W3 ···· Widthwise dimension of the filter portion
W4 ···· Widthwise dimension of the outlet

## Claims

1. A saddle-riding vehicle which comprises:
left and right paired main frames (1) with respect to a vehicle travelling direction, which frames (1) extend rearwardly from a head pipe (4) in the vehicle travelling direction;
an air cleaner (25) positioned between the left and right paired main frames (1) and disposed above a cylinder head (26) of an engine (E); and
a fuel tank (40) disposed above the air cleaner (25) with respect to the vehicle travelling direction, wherein
a recess (36) is formed in side walls of a cleaner casing (34) of the air cleaner (25), which side walls are opposed to each other in a vehicle widthwise direction with respect to the vehicle travelling direction, and is recessed inwardly of the vehicle widthwise direction;
a tank support portion (15) configured to support the fuel tank (40) is provided in each of the left and right frames (1) so as to protrude inwardly of the vehicle widthwise direction from the left and right main frames (1);
the tank support portion (15) is disposed in the recess (36);
**characterized in that**
the tank support portion (15) is configured to support, at a forward and rearward direction intermediate portion of the fuel tank (40) with respect to the vehicle travelling direction, an area of the fuel tank (40) having the largest widthwise dimension with respect to the vehicle travelling direction.

2. The saddle-riding vehicle as clamed in claim 1, wherein a widthwise dimension between left and right recesses (36) in an interior of the cleaner casing (34) is set to a value smaller than a widthwise dimension of a cleaner element (35) within the cleaner casing (34).

3. The saddle-riding vehicle as claimed in claim 2, wherein:
the cleaner element (35) comprises a filter portion (62), through which air passes, and a fitting portion (64) defined at a periphery of the filter portion (62); and
the widthwise dimension between the recesses (36) is set to a value larger than a widthwise dimension of the filter portion (62).

4. The saddle-riding vehicle as clamed in claim 2 or 3, wherein:
the engine (E) is a multi-cylinder engine having a plurality of cylinders (24) juxtaposed in the vehicle widthwise direction;
an outlet of the air cleaner (25) is composed of a plurality of cleaner outlets (25b) lined up on the vehicle widthwise direction in accordance with a row of the cylinders (24); and
the widthwise dimension between the recesses (36) is set to a value smaller than a widthwise dimension of the outlet.

5. The saddle-riding vehicle as claimed in any one of claims 1 to 3, further comprising a throttle body (27) configured to connect together an outlet of the air cleaner (25) and an air intake port (26a) of the cylinder head (26), wherein
the cleaner casing (34) includes a bottom wall (58) in which an upwardly recessed portion (60) is formed in the bottom wall (58), a portion of the throttle body (27) being accommodated in the recessed portion (60).

6. The saddle-riding vehicle as claimed in any one of claims 1 to 3, wherein
the cleaner casing (34) is constructed by connecting together two, upper and lower split casing halves (34, 34b);
a mating surface (55) between the casing halves (34, 34b) extends, in a longitudinal direction with respect to a vehicle body, along the main frames (1).

7. The saddle-riding vehicle as clamed in claim 6, wherein:
the air cleaner (25) has a front half portion, in which an inlet (25a) of the air cleaner (25) and a cleaner element (35) are provided, and also a rear half portion in which an outlet of the air cleaner (25) is provided;
an electronic control unit (38) is fitted to an upper surface of the front half portion of the air cleaner (25);
the inlet (25a) is formed in a lower portion of the front half portion of the cleaner (25); and
the upper surface of the front half portion of the air cleaner (25) is inclined upwardly towards a rear direction relative to the mating surface (55).

8. The saddle-riding vehicle as claimed in any one of claims 1 to 7, wherein the cleaner casing (34) has a bottom wall (58), a front half portion of which extends upwardly towards the rearward direction, with respect to the vehicle travelling direction, along an upper surface of the cylinder head (26).

9. The saddle-riding vehicle as claimed in any one of claims 1 to 8, wherein
the fuel tank (40) has a bottom plate formed with a concave portion (48) that is bulked in an upward direction, and
an upper portion of the air cleaner (25) is positioned within a space that is formed as a result of formation of the concave portion (48).

## Patentansprüche

1. Sattelfahrzeug, umfassend:
linke und rechte paarige Hauptrahmen (1) in Bezug auf eine Fahrzeugfahrtrichtung, die (1) sich von einem Kopfrohr (4) in Fahrzeugfahrtrichtung nach hinten erstrecken;
einen Luftreiniger (25), der zwischen dem linken und dem rechten paarigen Hauptrahmen (1) positioniert und über einem Zylinderkopf (26) eines Motors (E) angeordnet ist; und
einen Kraftstofftank (40), der in Bezug auf die Fahrzeugfahrtrichtung oberhalb des Luftreinigers (25) angeordnet ist, wobei
eine Aussparung (36) in Seitenwänden eines Reinigergehäuses (34) des Luftreinigers (25) ausgebildet ist, die sich in einer Fahrzeugquerrichtung in Bezug auf die Fahrzeugfahrtrichtung gegenüberliegen, und nach innen in Bezug auf die Fahrzeugfahrtrichtung vertieft ist;
ein Tankstützabschnitt (15), der so konfiguriert ist, dass er den Kraftstofftank (40) stützt und der in jedem der linken und rechten Rahmen (1) so vorgesehen ist, dass er von dem linken und rechten Hauptrahmen (1) in Fahrzeugquerrichtung nach innen vorsteht;
der Tankstützteil (15) in der Ausnehmung (36) angeordnet ist;
**dadurch gekennzeichnet, dass**
der Tankstützabschnitt (15) so konfiguriert ist, dass er an einem vorderen und hinteren Zwischenabschnitt des Kraftstofftanks (40) in Bezug auf die Fahrzeugfahrtrichtung einen Bereich des Kraftstofftanks (40) stützt, der die größte Breitenabmessung in Bezug auf die Fahrzeugfahrtrichtung aufweist.

2. Sattelfahrzeug nach Anspruch 1, wobei ein Breitenmaß zwischen der linken und rechten Ausnehmung (36) in einem Innenraum des Reinigergehäuses (34) auf einen Wert eingestellt ist, der kleiner ist als ein Breitenmaß eines Reinigerelements (35) innerhalb des Reinigergehäuses (34).

3. Sattelfahrzeug nach Anspruch 2, wobei:
das Reinigerelement (35) einen Filterabschnitt (62) durch den die Luft strömt, und einen an einem Umfang des Filterabschnitts (62) definierten Anschlussabschnitt (64) umfasst; und
die Breitenabmessung zwischen den Ausnehmungen (36) auf einen Wert eingestellt ist, der größer als eine Breitenabmessung des Filterabschnitts (62) ist.

4. Sattelfahrzeug nach Anspruch 2 oder 3, wobei:
der Motor (E) ein Mehrzylindermotor mit mehreren in Fahrzeugquerrichtung nebeneinanderliegenden Zylindern (24) ist;
ein Auslass des Luftfilters (25) aus einer Vielzahl von Filterauslässen (25b) besteht, die in Fahrzeugquerrichtung entsprechend einer Reihe der Zylinder (24) aufgereiht sind; und
die Breitenabmessung zwischen den Aussparungen (36) auf einen Wert eingestellt ist, der kleiner als eine Breitenabmessung des Auslasses ist.

5. Sattelfahrzeug nach einem der Ansprüche 1 bis 3, ferner umfassend einen Drosselkörper (27), der so konfiguriert ist, dass er einen Auslass des Luftfilters (25) und eine Lufteinlassöffnung (26a) des Zylinderkopfs (26) miteinander verbindet, wobei
das Reinigergehäuse (34) eine Bodenwand (58) aufweist, in der ein nach oben vertiefter Abschnitt (60) in die Bodenwand (58) ausgebildet ist, wobei ein Abschnitt des Drosselkörpers (27) in dem vertieften Abschnitt (60) untergebracht ist.

6. Sattelfahrzeug nach einem der Ansprüche 1 bis 3, wobei das Reinigergehäuse (34) durch Zusammenfügen von zwei, oberen und unteren, geteilten Gehäusehälften (34, 34b) aufgebaut ist;
eine Passfläche (55) zwischen den Gehäusehälften (34, 34b) sich in einer Längsrichtung in Bezug auf eine Fahrzeugkarosserie entlang der Hauptrahmen (1) erstreckt.

7. Sattelfahrzeug nach Anspruch 6, wobei:
der Luftfilter (25) einen vorderen Halbabschnitt, in dem ein Einlass (25a) des Luftfilters (25) und ein Filterelement (35) vorgesehen sind, und auch einen hinteren Halbabschnitt aufweist, in dem ein Auslass des Luftfilters (25) vorgesehen ist;
eine elektronische Steuereinheit (38) an einer oberen Fläche des vorderen Halbteils des Luftfilters (25) angebracht ist;
der Einlass (25a) in einem unteren Teil des vorderen Halbteils des Reinigers (25) ausgebildet ist; und
die obere Fläche des vorderen Halbabschnitts des Luftfilters (25) relativ zur Gegenfläche (55) nach oben in eine hintere Richtung geneigt ist.

8. Sattelfahrzeug nach einem der Ansprüche 1 bis 7, wobei das Reinigergehäuse (34) eine Bodenwand (58) aufweist, von der sich ein vorderer Halbabschnitt entlang einer Oberseite des Zylinderkopfs (26) in Bezug auf die Fahrtrichtung des Fahrzeugs nach oben in Richtung nach hinten erstreckt.

9. Sattelfahrzeug nach einem der Ansprüche 1 bis 8, wobei der Kraftstofftank (40) eine Bodenplatte aufweist, die mit einem konkaven Abschnitt (48) ausgebildet ist, der in einer Richtung nach oben gewölbt ist, und
ein oberer Abschnitt des Luftfilters (25) innerhalb eines Raums positioniert ist, der als Ergebnis der Bildung des konkaven Abschnitts (48) gebildet wird.

## Revendications

1. Véhicule à selle qui comprend :
des châssis principaux gauche et droit appariés (1) par rapport à un véhicule dans la direction de déplacement, ces châssis (1) s'étendent vers l'arrière d'une tubulure de refoulement (4) dans le véhicule dans la direction de déplacement ;
un filtre à air (25) positionné entre les châssis principaux gauche et droit appariés (1) et disposé au-dessus d'une culasse (26) d'un moteur (E) ; et
un réservoir de carburant (40) disposé au-dessus du filtre à air (25) par rapport au véhicule dans la direction de déplacement, où un évidement (36) est formé dans des parois latérales d'un boîtier de filtre (34) du filtre à air (25), lesquelles parois latérales sont opposées l'une à l'autre dans une direction de largeur du véhicule par rapport à la direction de déplacement du véhicule, et est en retrait vers l'intérieur de la direction de largeur du véhicule ;
une partie de support de réservoir (15) configurée pour supporter le réservoir de carburant (40) est pourvue dans chacun des châssis gauche et droit (1) de manière à faire saillie vers l'intérieur de la direction de largeur du véhicule à partir des châssis principaux gauche et droit (1) ;
la partie de support de réservoir (15) est disposée dans l'évidement (36) ;
**caractérisé en ce que**
la partie de support de réservoir (15) est configurée pour supporter, au niveau d'une partie intermédiaire de direction avant et arrière du réservoir de carburant (40) par rapport à la direction de déplacement du véhicule, une zone du réservoir de carburant (40) ayant la dimension de largeur plus grande par rapport à la direction de déplacement du véhicule.

2. Véhicule à selle selon la revendication 1, où une dimension de largeur entre les évidements gauche et droit (36) dans un intérieur du boîtier de filtre (34) est définie pour une valeur inférieure à une dimension de largeur d'un élément de filtre (35) à l'intérieur du boîtier de filtre (34).

3. Véhicule à selle selon la revendication 2, où :
l'élément de filtre (35) comprend une partie de filtre (62), à travers laquelle l'air passe, et une partie de fixation (64) définie au niveau d'une périphérie de la partie de filtre (62) ; et
la dimension de largeur entre les évidements (36) est définie à une valeur supérieure à une dimension de largeur de la partie de filtre (62).

4. Véhicule à selle selon la revendication 2 ou 3, où :
le moteur (E) est un moteur à plusieurs cylindres ayant une pluralité de cylindres (24) juxtaposés dans la direction de largeur du véhicule ;
une sortie du filtre à air (25) est composée d'une pluralité de sorties de filtre (25b) alignées sur la direction de largeur du véhicule conformément à une rangée de cylindres (24) ; et
la dimension de largeur entre les évidements (36) est définie pour une valeur inférieure à une dimension de largeur de la sortie.

5. Véhicule à selle selon l'une quelconque des revendications 1 à 3, comprenant en outre un corps de papillon (27) configuré pour relier entre eux une sortie du filtre à air (25) et un orifice d'admission d'air (26a) de la culasse (26), où
le boîtier de filtre (34) comprend une paroi inférieure (58) où une partie en retrait vers le haut (60) est formée dans la paroi inférieure (58), une partie du corps de papillon (27) étant logée dans la partie en retrait (60).

6. Véhicule à selle selon l'une quelconque des revendications 1 à 3, où le boîtier de filtre (34) est construit en reliant entre elles deux moitiés de boîtier divisées supérieure et inférieure (34, 34b) ;
une surface de contact (55) entre les moitiés de boîtier (34, 34b) s'étend, dans une direction longitudinale par rapport à un corps de véhicule, le long des châssis principaux (1).

7. Véhicule à selle selon la revendication 6, où :
le filtre à air (25) a une demi-partie avant, dans laquelle une entrée (25a) du filtre à air (25) et un élément de filtre (35) sont pourvus, et également une demi-partie arrière dans laquelle une sortie du filtre à air (25) est pourvue ;
une unité de commande électronique (38) est fixée à une surface supérieure de la demi-partie avant du filtre à air (25) ;
l'entrée (25a) est formée dans une partie inférieure de la demi-partie avant du filtre (25) ; et
la surface supérieure de la demi-partie avant du filtre à air (25) est inclinée vers le haut vers une direction arrière par rapport à la surface de contact (55).

8. Véhicule à selle selon l'une quelconque des revendications 1 à 7, où le boîtier de filtre (34) a une paroi inférieure (58), dont une demi-partie avant s'étend vers le haut vers la direction arrière, par rapport à la direction de déplacement du véhicule, le long d'une surface supérieure de la culasse (26).

9. Véhicule à selle selon l'une quelconque des revendications 1 à 8, où le réservoir de carburant (40) a une plaque inférieure formée avec une partie concave (48) qui est bombée dans une direction vers l'arrière, et
une partie supérieure du filtre à air (25) est positionnée à l'intérieur d'un espace qui est formé en tant que résultat de formation de la partie concave (48).
